# EUROPEAN PATENT SPECIFICATION

(11) **EP 1 919 022 B1**
(45) Date of publication and mention of the grant of the patent: **07.05.2014**
(21) Application number: 07254293.9
(22) Date of filing: 30.10.2007
(51) Int. Cl.: H01M 10/42, H01M 2/04, H01M 10/04

(54) **Secondary battery**
Sekundärbatterie
Batterie secondaire

(30) Priority: 30.10.2006 KR 20060105940
(43) Date of publication of application: 07.05.2008
(73) Proprietor: Samsung SDI Co., Ltd., Suwon-si, Gyeonggi-do (KR)
(72) Inventor: Hong, Jintae, Yongin-si, Gyeonggi-do (KR); Park, Inkyu, Yongin-si, Gyeonggi-do (KR); Baek, Woonseong, Yongin-si, Gyeonggi-do (KR)
(74) Representative: Mounteney, Simon James

(56) References cited:
- EP-A- 1 087 456
- EP-A- 1 309 020
- EP-A- 1 657 776
- US-A1- 2004 251 872

## Description

### BACKGROUND OF THE INVENTION

### Field of the Invention

The present invention relates to a secondary battery, and in particular to a secondary battery in which connection between a bare cell and a protection circuit can be established by a mechanical connection system without using a molding method.

### Description of the Related Art

Recently, various types of compact and light-weight electrical and electronic devices such as a portable wireless phone, a notebook computer, a personal digital assistant (PDA), a digital camera and so on have been widely developed and manufactured. A battery pack is used in order to enable these portable electrical and electronic devices to be operated even in the places where an additional power supply is not available. Such a battery pack includes at least one battery for outputting a voltage at a constant level for driving the portable device for a predetermined period.

For economical use, the battery pack can employ a secondary battery in which both of charging and discharging are available. A battery such as a nickelcadmium battery(Ni-Cd), nickel-hydrogen battery(Ni-MH), lithium(Li) battery and lithium ion battery and etc. can be typically used for the secondary battery.

The battery, as an energy source, is capable of storing a large amount of energy. The secondary battery stores a large amount of energy under the charged state, and receives energy from other energy sources while being charged. The received energy is stored in the battery. During such a process or state, if the secondary battery experiences a problem such an internal short state, the energy stored in the battery is discharged in a very short time period and simultaneously, and therefore a safety problem such as ignition, explosion, and so on can be generated.

Because of this danger, various kinds of safety devices are typically provided in a secondary battery in order to prevent ignition or explosion under the charging state or during charging. The safety devices are usually connected to an anode terminal and a cathode terminal of a bare cell via a conduction structure called as a lead plate. When the voltage of the battery increases suddenly, because of sharp increase of the temperature and excessive charging and discharging of the battery, the devices block the flow of the current, and thus prevent ignition and rupture of the battery. Safety devices that can be connected to the bare cell include: a protection circuit that detects an abnormal current or a voltage and blocks the flow of the current, a positive temperature coefficient (PTC) element that operates when overheating is generated due to an abnormal current, and a bimetal element.

A secondary battery in which the bare cell and the safety devices are mutually connected, can be embedded in a separate case, such that a complete exterior appearance is realized. As an alternative, a resin pack secondary battery includes a bare cell and a protection circuit that are mutually connected by welding, anda molding resin is injected into the space between them or the space of the periphery without using a separate case.

In the case of a resin pack secondary battery, there are merits in that the external appearance can be made smooth by molding, the thickness of cab is reduced by the thickness of the case, and the inconvenience that a battery is embedded in a case is eliminated, as compared with the battery in which a core cell having the safety device mounted on the bare cell is embedded in a case.

However, in the secondary battery of a resin pack type as described above, the molding resin is different from a can or a cap plate of bare cell. Therefore, the molding resin is removed easily from the bare cell.

Furthermore, during the processes for injecting the molding resin, it is difficult to inject the molding resin in a uniform amount.

Consequently, when the excessive molding resin is injected between the bare cell and the protection substrate, the exterior appearance of the completed secondary battery becomes bad, or on the contrary, when insufficient molding resin is injected between the bare cell and the protection substrate, the exterior appearance of the completed secondary battery is also bad, and the hardness of the molding resin portion is very weak, thereby the structural safety of the secondary battery is reduced remarkably.

Furthermore, after connecting the bare cell and the protection substrate through molding resin, there is a very troublesome problem that the bare cell and the protection substrate should be connected once again.

EP1657776 discloses a battery for a mobile communication terminal that includes a battery cell, a protection circuit assembly connected to the battery cell, a protection cover configured to cover the protection circuit assembly and a coupling unit configured to couple the protection cover to the battery cell.

US2004/0251872 discloses a rechargeable battery having a battery core, a battery protective circuit and a cover. The cover can be injection moulded from rubber or plastic as a separate unit.

EP1309020 discloses a battery back for use with a cellular telephone that includes a flat battery cell assembly encased by a resin using low temperature moulding techniques or injection moulding techniques under low pressure.

An interface assembly cap provides an electrical connection means between the cell assembly and the cellular telephone device with which it is used.

EP1087456 a protection device that has protective housing and a terminal cap. The protective housing has a base with a contact hole therethrough for receiving an electrical terminal pin.

### SUMMARY OF THE INVENTION

The present invention seeks to provide solutions for the problems, and an object of the present invention is to provide a secondary battery in which connection between the bare cell and the protection circuit module can be established by a mechanical connection system without using a molding resin.

A further object of the present invention is to provide a secondary battery in which the connection between the bare cell and the protection circuit module is established by a mechanical connection system that offers an improved ability to resist an external force such as bending or distortion applied to the connection portion between the bare cell and the protection circuit module.

A further object of the present invention is to provide a secondary battery in which the process for connecting the bare cell and the protection circuit module can be performed easily, the connection state can be made excellent even when the connection state between the bare cell and the protection circuit module is bad, and separation and re-connection of the bare cell and the protection circuit module can be easily executed if necessary.

In order to accomplish above objects, according to a first aspect of the present invention there is provided a secondary battery as set out in Claim 1. Preferred features of this aspect are set out in Claims 2 to 9.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is an exploded perspective view for illustrating an embodiment of a secondary battery according to the present invention;
FIG. 2 is a perspective view of a connection structure of a secondary battery according to the embodiment of FIG. 1;
FIG. 3 is a cross-sectional view of III-III line of FIG. 2;
FIG. 4 is a cross-sectional view illustrating another example of a connection member of a secondary battery according to the embodiment of FIG. 1;
FIG. 5 is an exploded perspective view illustrating another embodiment of a secondary battery according to the present invention;
FIG. 6 is a cross-sectional view illustrating a connection structure of a secondary battery according to the embodiment of FIG. 5;
FIG. 7 is an exploded perspective view illustrating another embodiment of a secondary battery according to the present invention;
FIG. 8 is a cross-sectional view illustrating a connection structure of a secondary battery according to the embodiment of FIG. 7;
FIG. 9 is an exploded cross-sectional view illustrating another embodiment of a secondary battery according to the present invention;
FIG. 10 is a cross-sectional view illustrating a connection structure of a secondary battery according to an embodiment of FIG. 9;
FIG. 11 is a lateral cross-sectional view illustrating the main portions of FIG. 10;
FIG. 12 is an exploded cross-sectional view illustrating another embodiment of a secondary battery according to the present invention;
FIG. 13 is a lateral cross-sectional view of a secondary battery according to the embodiment of FIG. 12; and
FIG. 14 is a plane cross-sectional view of a secondary battery according to the embodiment of FIG. 12.

### DETAILED DESCRIPTION OF THE INVENTION

Hereinafter, the preferred embodiment of the present invention will be described in detail with reference to the accompanying drawings.

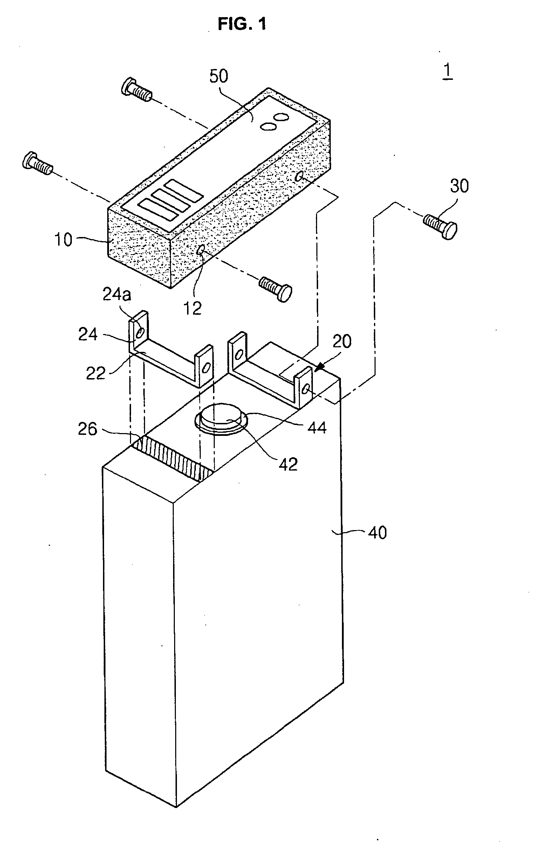

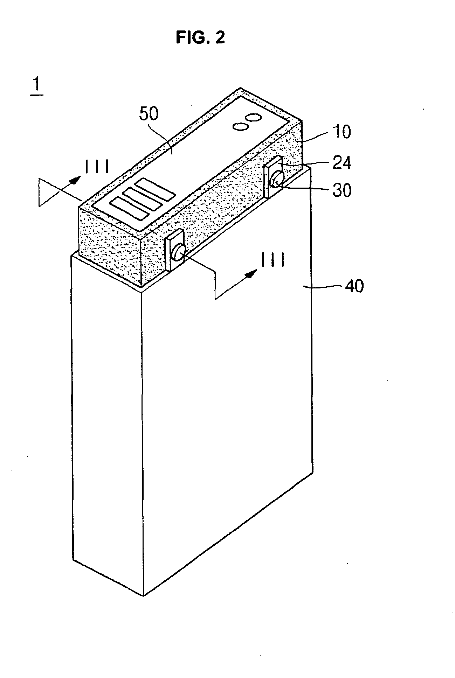

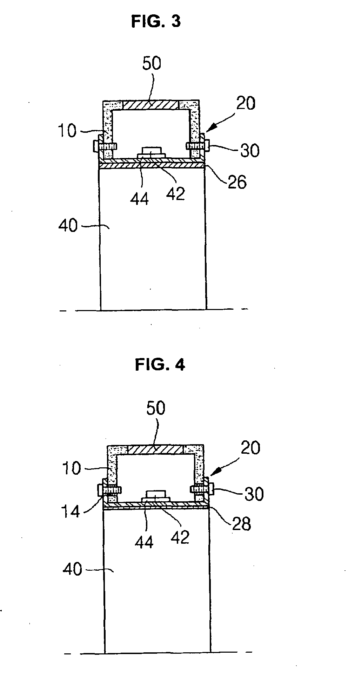

FIG. 1 is an exploded perspective view for illustrating an embodiment of a secondary battery according to the present invention, FIG. 2 is a perspective view of a connection structure of a secondary battery according to the embodiment of FIG. 1, and FIG. 3 is a cross-sectional view of III-III line of FIG. 2.

As shown in FIGS. 1 through 3, a secondary battery 1 of the present invention includes a bare cell 40, a protection circuit substrate 50, a substrate molding body 10 integrally formed with the protection circuit substrate 50, a pair of support members 20, and connection members 30.

Charging and discharging can be performed in the bare cell 40, and an electrode terminal 42 is connected to one surface of the bare cell 40 through an insulation gasket 44, such that insulation is maintained.

The substrate molding body 10 is integrally formed with the protection circuit substrate 50, and thus is connected to one surface of the bare cell 40 by a mechanical connection method. Here, the substrate molding body 10 can be integrally formed with the protection circuit substrate 50 through injection molding method. Each support member 20 is connected to the bare cell 40 for coupling the substrate molding body 10 to one surface of the bare cell 40, and thus includes a connection unit 24 that connects the substrate molding body 10 to one surface of the bare cell 40.

As shown in FIG. 1, the bare cell 40 has a top surface, bottom surface, and side surface. The substrate molding body 10 is installed on the top surface of the bare cell 40, and the support member is coupled to each of the bare cell 40 and the substrate molding body 10 to connect the substrate molding body 10 to the bare cell 40.

Referring to the support members 20 as described above, each support member 20 includes a base unit 22 that is connected to the top surface of the bare cell 40, and a pair of connection units 24 that extends towards the substrate molding body 10 from the base unit 22 along the direction perpendicular to the top surface of the bare cell 40. As shown in FIG. 1, one of the connection units 24 is arranged at each end of each respective base unit 22. The pair of the connection units 24 are arranged to be parallel to each other. Two or more connection units 24 can be employed on the base unit 22. In the present embodiment, the substrate molding body 10 is inserted into the space defined between the pairs of the connection units 24 and their base units 22. The connection is completed by connection members 30 (which in this case are bolts).

The base units 22 each have a rectangular outline when viewed in a direction parallel to the top surface of the bare cell. The connection units also have a rectangular outline.

The support member 20 is fixed to the bare cell 40 in such a manner that long sides of the base units 22 extend along a thickness direction of the bare cell 40. The support members are symmetrically arranged about the electrode terminal 42.

The base units 22 are connected to the top surface of the bare cell 40 by welding. The welding is typically resistance welding.

Because the support member 20 is an element for fixing the substrate molding body 10, which is integrally formed with the protection circuit substrate 50, to the bare cell 40, it is preferable that the support member 20 is mounted on the surface on which the electrode terminal 42 of the bare cell 40 is arranged.

More than two support members can be coupled to the bare cell 40. But in the present embodiment, because the support members are arranged on both sides of the electrode terminal 42 of the bare cell 40, the support members have sufficient stability and rigidity against the substrate molding body 10, and the installation process of the support members on the bare cell 40 can be easily executed. Therefore, it is sufficient to have two support members that are arranged on opposite sides of the electrode terminal 42.

The connection members 30 are in this case connection bolts, and the connection bolts are each coupled to a respective connection unit 24 of a support member 20 and the substrate molding body 10. Each connection bolt penetrates a respective connection unit 24 through a connection hole 24a, and a lateral side of the substrate molding body 10 through a screw hole 12. For this purpose, screw holes 12 for the connection bolts are formed on two opposite sides of the substrate molding body 10. A thread for engagement with the connection bolts 30 is formed inside the screw holes 12.

As illustrated in FIG. 4, nuts 14 for the connection bolts can be integrally formed in the substrate molding body 10 during injection molding. the connection bolts are then engaged with the nuts, thereby forming the connection between the connection units 24 of the support members 20 and the substrate molding body 10.

In this embodiment, the base unit 22 is coupled to one surface of the bare cell 40 via an adhesion layer 28.

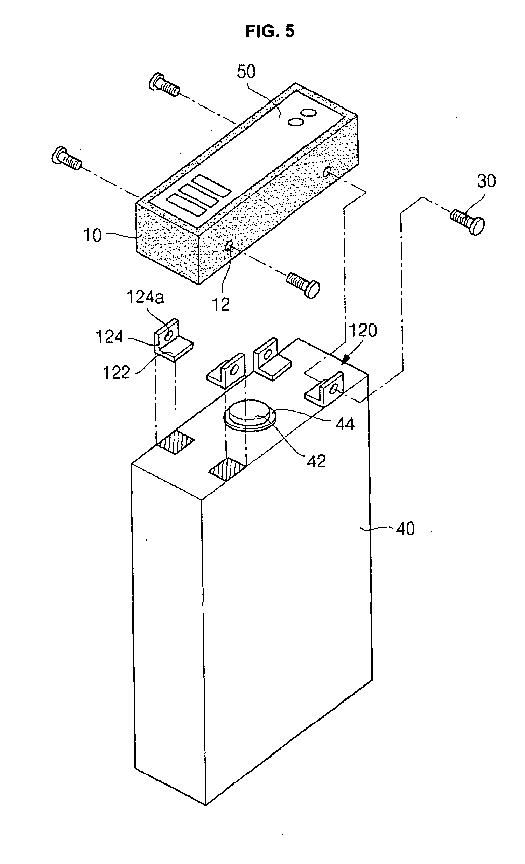

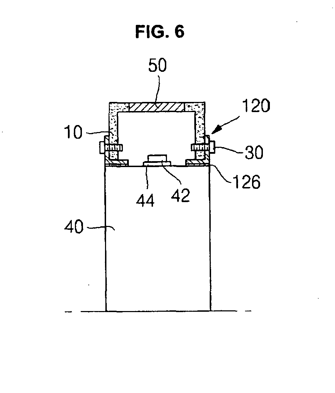

FIG. 5 and FIG. 6 illustrate another embodiment of a secondary battery according to the present invention. As illustrated in FIGS 5 and 6, each support member 120 includes a pair of base units 122 which are connected to the top surface of the bare cell 40. A respective connection unit 124 extends toward the substrate molding body 10 from each base unit 122 along a direction perpendicular to the top surface. Each connection unit 124 has a connection hole 124a in through which a connection member 30 is inserted.

In this embodiment, the support members can be positioned at one side of the top surface of the bare cell (for example, along an edge connected to the front side surface of the bare cell 40). In this case, one lateral side of the substrate molding body is connected to the connection units of the support members, and thus the substrate molding body can be installed on the top surface of the bare cell. However, because a pair of support members in which a member is situated on each opposite side of the top surface of the bare cell improves the stability of the installation of the substrate molding body on the top surface of the bare cell, it is preferable that a pair or more than a pair of support members are symmetrically formed on the top surface of the bare cell 40 about the electrode terminal 42. FIG. 4, for example, shows two support members that are arranged on one side of the top surface of the bare cell, and another two support members that are arranged on another side of the top surface of the bare cell. One support member on the one side of the top surface forms a pair with another support member formed on the another side of the top surface. The substrate molding body 10 is inserted between the connection units of the support members.

In the present embodiment, a structure in which the support member 120 is connected to one surface of the bare cell is taken as an example, and because the support member 120 is an element for fixing a substrate molding body 10, which is formed on the protection circuit substrate 50, to the bare cell 40, it is preferable that the support member 120 is formed on the surface on which the electrode terminal 42 of the bare cell 40 is provided.

Referring to FIGS. 5 and 6, one pair of support members 120 is arranged on one side of the electrode terminal 42, and another pair of support members 120 is arranged on another side of the electrode terminal 42. In each of the pairs of the support members, one support member is arranged on one side of the top surface of the bare cell 40, and another support member is arranged on another side of the top surface of the bare cell 40. The substrate molding body 10 is inserted between these two support members 120 arranged on the opposite sides of the top surface of the bare cell 40 in a thickness direction of the bare cell 40. Therefore, each lateral side of the substrate molding body 10 is connected to one of connection units of these support members.

Here, a structure is employed in which the base unit 122 of each support member 120 is formed with a rectangular outline, and a respective connection unit 124 extends from one longer side of the base unit 122 having a rectangular shape. In other words, the longer side of the base unit 122 is formed along an edge of the top surface of the bare cell 40, and a shorter side of the base unit 122 extends inside the top surface from the edge of the top surface, which can be viewed as a thickness direction of the bare cell 40.

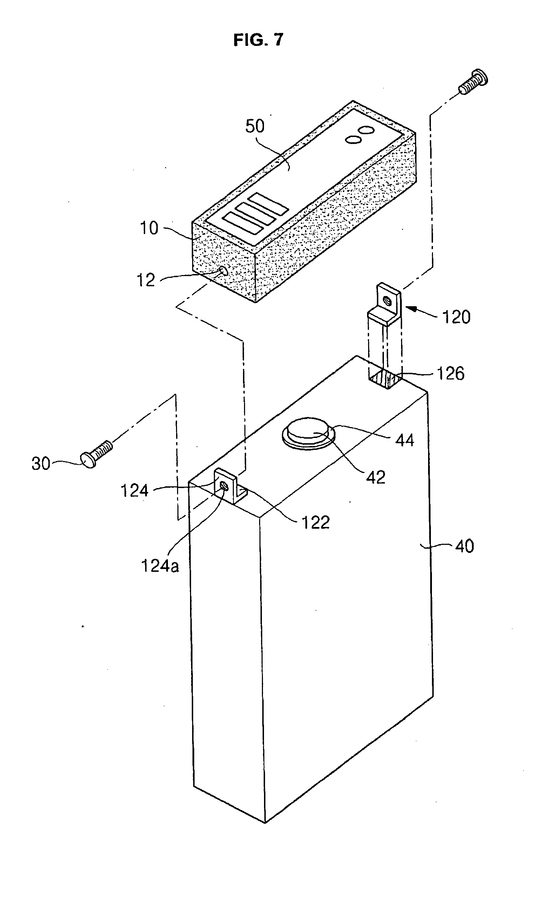

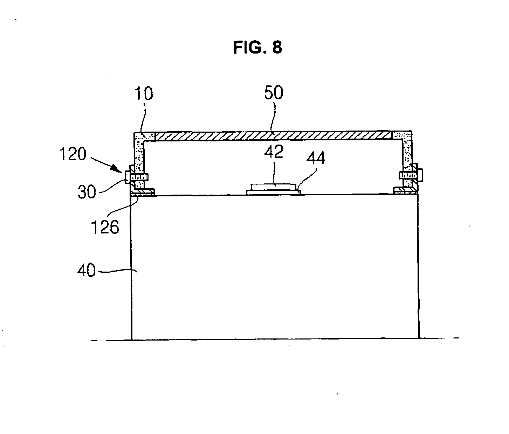

FIG. 7 and FIG. 8 illustrate an embodiment in which the support members are provided at different sides of the top surface of the bare cell 40 from the side shown in FIGS. 5 and 6. Herein, it can be described that the support member shown in FIGS. 7 and 8 is arranged along a thickness side (or edge) of the top surface of the bare cell 40, while the support member shown in FIGS. 5 and 6 is arranged along a width side (or edge) of the top surface of the bare cell 40. The thickness side and the width side are relatively defined. That is, one side of the top surface is a width side, another side, which is substantially perpendicular to the width side, is a thickness side of the top surface. As illustrated in FIGS. 7 and 8, the support members 120 can be symmetrically arranged on both thickness sides of the top surface about the electrode 42. Further, the substrate molding body 10 is inserted between the support members 120 symmetrically arranged on both thickness sides, and the substrate molding body 10 is connected to each of the support members through the side surface that is substantially parallel to the width side of the top surface. Therefore, a screw hole 12 is formed on a side of the substrate molding body 10 that is parallel to the thickness side of the bare cell 40, and the substrate molding body 10 is connected to each of the support members through the connection member 30. The connection unit 124 has a connection hole 124a in through which a connection member 30 is inserted.

Furthermore, in the embodiments described above, the bare cell has a shape of a box or rectangular parallelopiped, and the top surface of the bare cell 40 is substantially a rectangular shape. The shape of the bare cell is, however, not limited to this shape. For example the top surface of the bare cell can be hexagon or octagon. In this case, the width or thickness sides can be defined as one of sides of the geometrical shape, and the width and thickness sides do not need to be perpendicular. Regardless of the shape of the top surface of the bare cell, the support members shown in FIGS. 1 through 8 can be symmetrically arranged according to the principles of the present invention. The support member can be arranged along an edge of the top surface or can be arranged slightly being retreated inside the top surface from the edge of the top surface.

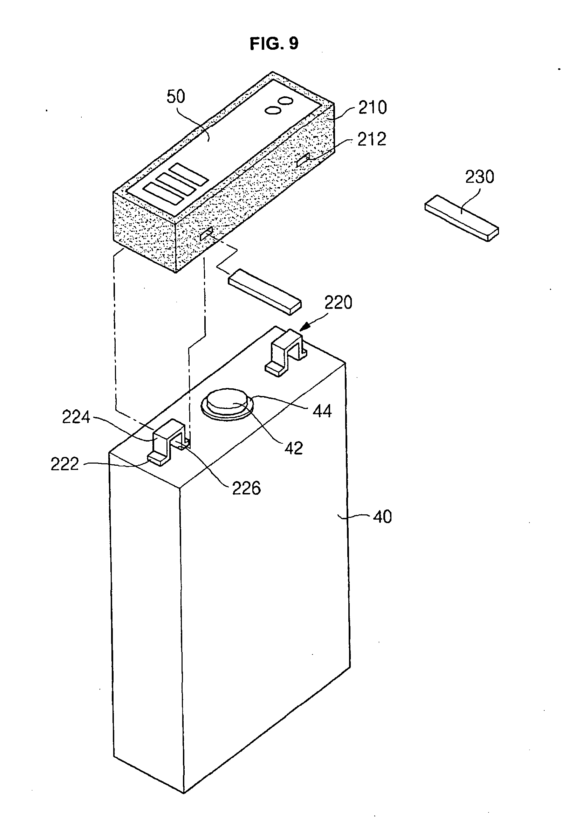

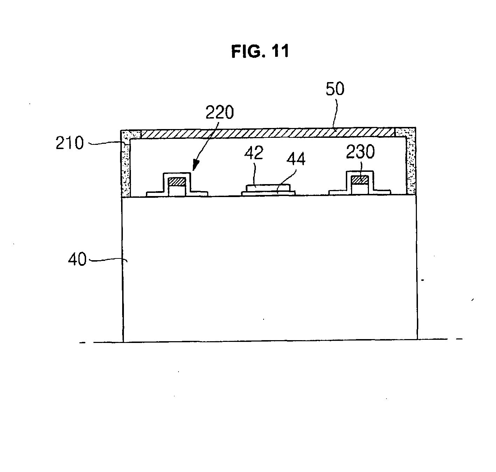

FIGS. 9, 10, and 11 illustrate another embodiment of a secondary battery according to the present invention. As illustrated in FIGS. 9, 10, and 11, the support member 220 of this embodiment includes a pair of hook units 224, each of which has the shape of an inverted U-shaped bracket. Each hook unit 224 includes a pair of fixing units 222, which are formed as bases connected to the bottom ends of the inverted U-shaped bracket. The support member 220 is formed on a top surface of the bare cell 40 with the fixing units 222 connected to the top surface. Therefore a space (referred to as a "connection hole") 226 is formed between each hook unit 224 and the top surface of the bare cell 40 as shown in FIG. 9. Generally, the hook units 224 can have a shape that is slightly curved or bent plate, and fixing units 222 are formed at both ends of the bent plate. The cross-sectional shape of each connection hole 226 can be a semi-circle or trapezoid, depending on the shape of the respective hook unit 224.

Connection members for connecting the support member 220 and the lateral side of the substrate molding body 210 take the form of connection pins 230. That is, connection pins 230, each having a cross-sectional shape corresponding to the horizontal cross-sectional shape of the hook units 224 are provided. To form a connection, the connection pins 230 are inserted through one lateral side of the substrate molding body 210, the connection hole 226 formed inside the hook unit 224 of the support member 220, and the other lateral side of the substrate molding body 210, sequentially. As a consequence of this operation each end of each connection pin 230 is supported in a respective lateral side of the substrate molding body 210, and one surface thereof is supported against the inner side of or respective connection hole 226. Each connection pin 230 consequently supports two opposite lateral sides of the substrate molding body 210 via both ends thereof while the connection pin 230 is inserted a respective support member 220 which is connected to one surface of the bare cell 40. Thus the substrate molding body 210 is connected to one surface of the bare cell 40 without being separated from the bare cell 40.

Through holes 212 are formed on the two opposite lateral sides of the substrate molding body 210 for insertion and support of the connection pins 230, and, the cross-sectional shape of the through holes 212 corresponds to the cross-sectional shape of the connection pins 230. The distance between the surface of the substrate molding body 210 contacting one surface of the bare cell 40 and the through holes 212 corresponds to the height of the fixing units 222 of the support member 220 when designating the one end of the substrate molding body 210 contacting one surface of the bare cell 40 as a reference. The reason for this is as follows. Even if the connection pins 230 are formed as structures having sharp ends, because it is not easy to insert the pins into the lateral side of the substrate molding body 210, the through holes 212 of the shape corresponding to the shape of the insertion holes 226 of the support members 220 are formed on two opposing lateral sides of the substrate molding body 210, thereby a process for supporting the substrate molding body 210 against one surface of the bare cell 40 can be easily executed by inserting the connection pins 230 into the substrate molding body 210 and the support members 220.

In addition, because the connection pins 230 can be easily inserted via the through holes 212 of the substrate molding body 210, even if they are relatively soft, they can exhibit the support function against the substrate molding body 210 sufficiently. Thus the connection pins 230 can be manufactured by injection molding like the substrate molding body 210. That is, the materials necessary for forming the connection pins 230 can be identical to those employed for forming the substrate molding body 210, and therefore, facilitation of abrasion of the substrate molding body 210, and reduction of support force of the connection pins 230 against the substrate molding body 210 which can be generated due to the connection pins 230 when forming the connection pin by using very hard materials as compared with the substrate molding body 210 can be prevented.

Furthermore, in this way, since the widths of the through holes 212 formed in the substrate molding body 210 are formed as being equal to or less than the cross-sectional area of the connection pins 230, the connection pins 230 are closely attached to the inner sides of the through holes 212, and are inserted into the through holes 212 and the insertion holes 226 of the support members 220, and thereby the supporting function against the substrate molding body 210 can be performed excellently.

Furthermore, in the present embodiment, an example is explained in which the support members 220 and the connection pins 230 functioning as a connection member are applied to the bare cell 40 in polygonal shape. Therefore, the support members 220 are formed as a pair on both ends of one surface on which the electrode terminal 42 of the bare cell 40 in polygonal shape is provided with centering around the electrode terminal 42, and the substrate molding body 210 is connected to one surface of the bare cell 40 while the substrate molding body 210 is supporting both ends of one surface on which the electrode terminal 42 of the bare cell 40 in polygonal shape is provided with centering around the electrode terminal 42 by using a pair of the connection pins 230 and a pair of the support member 220.

In the present embodiment, the support members 220 and the connection pins 230 are formed as a pair arranged symetrically on either side of the electrode terminal 42. However the invention is not limited to this structure, and it is natural that they can be formed at many positions if necessary.

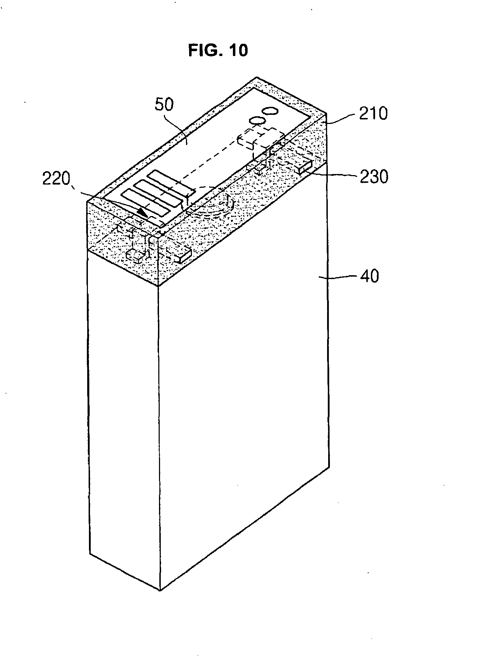

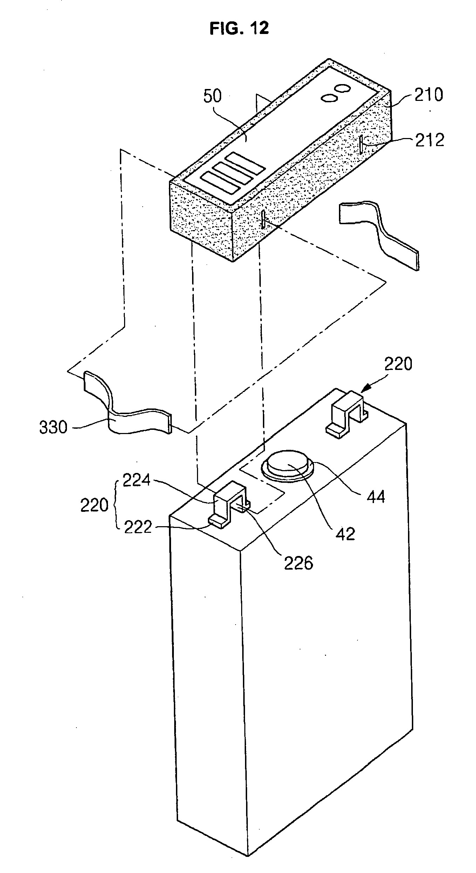

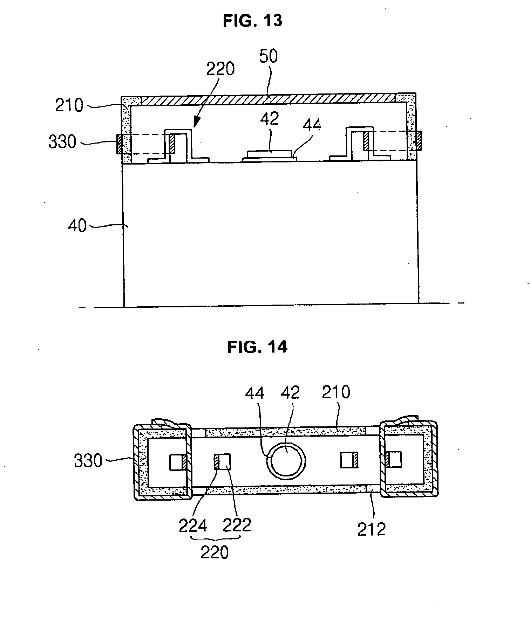

FIGS. 12 through 14 illustrate another embodiment of a secondary battery according to the present invention. As illustrated in the drawings, the support members 220 have a structure which is identical to that of the support members of the embodiments shown in FIG. 9 and FIG. 10, but the connection member for connecting the substrate molding body 210 to one surface of the bare cell 40 via the support members 220 comprises connection bands 330. The connection bands 330 connect the substrate molding body 210 to the support members 220 tightly via through holes 212 formed on opposing sides of the substrate molding body 210, and connection holes 226 formed inside the hook units 224 of the support members 220. In other words, a structure can be realized in which the substrate molding body 210 is connected and fixed to the bare cell 40 via the connection band 230 and the support member 220.

According to the structure of the above embodiments, since the bare cell and the protection circuit substrate are connected as a mechanical connection structure comprising a substrate molding body, a support member and a connection means, a tightly connected structure can be maintained as compared with the conventional structure for connecting the bare cell and the protection circuit substrate by a molding resin. Therefore, the degree of resistance offered by the connection portion when the mutually connected bare cell and the protection circuit substrate are subjected to an external force such as distortion or bending is improved.

The process of injecting molding resin could not be performed smoothly during a conventional molding process for the bare cell and the protection circuit substrate, and the connection state between the bare cell and the protection circuit substrate could become very bad due to such an insufficient molding resin. In the present invention, this problem is excluded from the beginning.

Furthermore, the problem can be excluded initially that excessive injection of the molding resin is performed during a molding process for the bare cell and the protection circuit substrate, and thus the connection portion between the bare cell and the protection circuit substrate becomes bad.

With embodiments of the present invention, if the connection state between the bare cell and the protection circuit substrate is not good, they can easily be disconnected and reconnected if necessary.

As illustrated by the embodiments described above, in a secondary battery according to the present invention, since the bare cell and the protection circuit substrate are connected by a mechanical connection structure, the process for connecting the bare cell and the protection circuit substrate can be executed many times at the same time without any restrictions. Consequently, a secondary battery can be realized in which the connection portion between the bare cell and the protection circuit substrate is always maintained in an excellent state.

Furthermore, since the connection force between the bare cell and the protection circuit substrate does not always depend on the molding portion having a relatively weak hardness, and they are connected through the connection between the frame molded by injection, and the support member having a predetermined hardness, the connection force is improved, and hardness for resisting the external force such as bending or distortion applied to the connection portion between the bare cell and the protection circuit module is improved.

Moreover, if necessary, since separation and re-connection of the bare cell and the protection circuit module can be easily executed, there is an effect that a repair operation or a maintenance operation can be easily executed when some technical problems are generated in the protection circuit module as well as the protection circuit substrate while using the secondary battery.

## Claims

1. A secondary battery comprising:
a bare cell (40) for storing electricity;
a protection circuit substrate (50) electrically connected to the bare cell (40), the protection circuit substrate including a protection circuit for the bare cell (40);
a substrate molding body (210) combined with the protection circuit substrate;
a support member having a hook unit and a first fixing unit that is connected to a first end of the hook unit, the first fixing unit being connected to a first surface of the bare cell, and a second fixing unit that is connected to a second end of the hook unit, the second fixing unit being connected to the first surface of the bare cell, wherein a connection hole is formed surrounded by the hook unit and the first surface of the bare cell; and
a connection member for connecting the substrate molding body to the hook unit, wherein the substrate molding body has a through hole (212) through which the connection member is coupled, wherein the connection member is made out of the same material as the substrate molding body.

2. A secondary battery according to claim 1, wherein the connection member is a connection pin, and the width of the through hole is equal to or smaller than the size of the cross-section of the connection pin.

3. A secondary battery according to claim 1 or 2, wherein the connection hole has a shape of a semi-circle or polygon.

4. A secondary battery according to any one of claims 1 to 3, wherein the connection member includes a connection band that penetrates the through hole and is coupled to the hook unit, the connection band wrapping a portion of a surface of the substrate molding body.

5. A secondary battery according to any preceding claim, further comprising:
a second said support member coupled to the bare cell (40), and a second said connection member.

6. A secondary battery according to any preceding claim, wherein the or each support member is welded to the first surface of the bare cell (40).

7. A secondary battery according to claim 6, wherein the or each support member is welded to the first surface of the bare cell (40) by a resistance welding.

8. A secondary battery according to any preceding claim, further comprising an adhesion layer that is disposed between the or each support and the first surface of the bare cell, the or each support member adhering to the first surface of the bare cell through the adhesion layer.

9. A secondary battery according to any preceding claim, wherein the substrate molding body is seamlessly and integrally formed with the protection circuit substrate by injection.

## Patentansprüche

1. Sekundärbatterie, umfassend:
eine unverkleidete Zelle (40) zum Speichern von Elektrizität;
ein Schutzschaltungssubstrat (50), das mit der unverkleideten Zelle (40) elektrisch verbunden ist, wobei das Schutzschaltungssubstrat eine Schutzschaltung für die unverkleidete Zelle (40) aufweist;
einen Substratgießkörper (210), der mit dem Schutzschaltungssubstrat kombiniert ist;
ein Stützelement mit einer Hakeneinheit und einer ersten Befestigungseinheit, die mit einem ersten Ende der Hakeneinheit verbunden ist, wobei die erste Befestigungseinheit mit einer ersten Oberfläche der unverkleideten Zelle verbunden ist, und einer zweiten Befestigungseinheit, die mit einem zweiten Ende der Hakeneinheit verbunden ist, wobei die zweite Befestigungseinheit mit der ersten Oberfläche der unverkleideten Zelle verbunden ist, worin ein Verbindungsloch ausgebildet ist, das von der Hakeneinheit und der ersten Oberfläche der unverkleideten Zelle umgeben ist; und
ein Verbindungselement zum Verbinden des Substratgießkörpers mit der Hakeneinheit, worin der Substratgießkörper ein Durchgangsloch (212) hat, durch welches das Verbindungselement angekoppelt wird, worin das Verbindungselement aus dem gleichen Material wie der Substratgießkörper hergestellt ist.

2. Sekundärbatterie nach Anspruch 1, worin das Verbindungselement ein Verbindungsstift ist und die Weite des Durchgangslochs gleich oder kleiner als die Größe des Querschnitts des Verbindungsstiftes ist.

3. Sekundärbatterie nach Anspruch 1 oder 2, worin das Verbindungsloch die Form eines Halbkreises oder Vielecks hat.

4. Sekundärbatterie nach einem der Ansprüche 1 bis 3, worin das Verbindungselement ein Verbindungsband aufweist, welches das Durchgangsloch durchdringt und mit der Hakeneinheit gekoppelt ist, wobei das Verbindungsband einen Abschnitt einer Oberfläche des Substratgießkörpers umschlingt.

5. Sekundärbatterie nach einem der vorhergehenden Ansprüche, ferner umfassend:
ein zweites besagtes Stützelement, das mit der unverkleideten Zelle (40) gekoppelt ist, und ein zweites besagtes Verbindungselement.

6. Sekundärbatterie nach einem der vorhergehenden Ansprüche, worin das oder jedes Stützelement mit der ersten Oberfläche der unverkleideten Zelle (40) verschweißt ist.

7. Sekundärbatterie nach Anspruch 6, worin das oder jedes Verbindungselement durch Widerstandsschweißen mit der ersten Oberfläche der unverkleideten Zelle (40) verschweißt ist.

8. Sekundärbatterie nach einem der vorhergehenden Ansprüche, ferner eine Haftschicht umfassend, die zwischen dem oder jedem Stützelement und der ersten Oberfläche der unverkleideten Zelle angeordnet ist, wobei das oder jedes Stützelement über die Haftschicht an der ersten Oberfläche der unverkleideten Zelle haftet.

9. Sekundärbatterie nach einem der vorhergehenden Ansprüche, worin der Substratgießkörper durch Spritzgießen nahtlos und einstückig mit dem Schutzschaltungssubstrat ausgebildet ist.

## Revendications

1. Batterie secondaire comprenant :
une cellule nue (40) pour stocker de l'électricité ;
un substrat de circuit de protection (50) connecté électriquement à la cellule nue (40), le substrat de circuit de protection comprenant un circuit de protection pour la cellule nue (40) ;
un corps de moulage de substrat (210) combiné avec le substrat de circuit de protection ;
un élément de support comportant une unité d'accrochage et une première unité de fixation qui est reliée à une première extrémité de l'unité d'accrochage, la première unité de fixation étant reliée à une première surface de la cellule nue, et une deuxième unité de fixation qui est reliée à une deuxième extrémité de l'unité d'accrochage, la deuxième unité de fixation étant reliée à la première surface de la cellule nue, dans laquelle un trou de liaison est formé, entouré par l'unité d'accrochage et la première surface de la cellule nue ; et
un élément de liaison pour relier le corps de moulage de substrat à l'unité d'accrochage, dans laquelle le corps de moulage de substrat comporte un trou traversant (212) à travers lequel l'élément de liaison est accouplé, dans laquelle l'élément de liaison est réalisé en le même matériau que le corps de moulage de substrat.

2. Batterie secondaire selon la revendication 1, dans laquelle l'élément de liaison est une broche de liaison, et la largeur du trou traversant est inférieure ou égale à la taille de la section de la broche de liaison.

3. Batterie secondaire selon la revendication 1 ou 2, dans laquelle le trou de liaison a la forme d'un demi-cercle ou d'un polygone.

4. Batterie secondaire selon l'une quelconque des revendications 1 à 3, dans laquelle l'élément de liaison comprend une bande de liaison qui pénètre dans le trou traversant et qui est accouplée à l'unité d'accrochage, la bande de liaison enveloppant une partie d'une surface du corps de moulage de substrat.

5. Batterie secondaire selon l'une quelconque des revendications précédentes, comprenant en outre :
un deuxième dit élément de support accouplé à la cellule nue (40), et un deuxième dit élément de liaison.

6. Batterie secondaire selon l'une quelconque des revendications précédentes, dans laquelle le ou chaque élément de support est soudé à la première surface de la cellule nue (40).

7. Batterie secondaire selon la revendication 6, dans laquelle le ou chaque élément de support est soudé à la première surface de la cellule nue (40) par soudage par résistance.

8. Batterie secondaire selon l'une quelconque des revendications précédentes, comprenant en outre une couche d'adhérence qui est disposée entre le ou chaque élément de support et la première surface de la cellule nue, le ou chaque élément de support adhérant à la première surface de la cellule nue par l'intermédiaire de la couche d'adhérence.

9. Batterie secondaire selon l'une quelconque des revendications précédentes, dans laquelle le corps de moulage de substrat est formé sans raccord et d'un seul tenant avec le substrat de circuit de protection par injection.
